# EUROPEAN PATENT APPLICATION

(11) **EP 4 223 669 A1**
(43) Date of publication of application: **09.08.2023**
(21) Application number: 23154035.2
(22) Date of filing: 30.01.2023
(51) Int. Cl.: B65G 15/02, B65G 15/64

(54) **BELT CURVE**

(30) Priority: 04.02.2022 DE 102022102695
(71) Applicant: Interroll Holding AG, 6592 Sant' Antonino (CH)
(72) Inventor: Fabianatz, Philipp, 41836 Hückelhoven (DE); Dörr, Marcus, 41836 Hückelhoven (DE); Dunin-Lemke, Sergej, 41836 Hückelhoven (DE); Kaiser, Marius, 41836 Hückelhoven (DE)
(74) Representative: Kohlhof, Stephan

(57) **Abstract**

Belt curve (1),
the belt curve is adapted to convey an object along a curved conveying direction (C) between a first end (E1) and a second end (E2), wherein the conveying direction (C) is perpendicular to a radial direction (R);
the belt curve comprising:
- a supporting frame (2);
- a conveying belt (3), which is arranged circumferentially on the support frame (2) and adapted to carry the object;
- at least one deflection roller (4) located at each of the first end (E1) and the second end (E2), the conveying belt is deflected around the deflection roller (4);
- a drive (5) adapted to provide a drive power for the conveying belt (3);
- a guiding (64), in particular a guide rail, adapted to guide the conveying belt (3) in the conveying direction (C), thereby providing a guiding force (F2) in radial outward direction (R)
- a tensioner (7) adapted for selective amendment of the radial guiding force (F2) to the conveying belt (3).

## Description

The invention refers to a belt curve.

A belt curve is shown under https://www.voutube.com/watch?v=QokVhGOa!v)fU. This belt curve is in the following referred to as the "conventional belt curve".

For adapting the tension of the conveying belt the position of the deflection rollers at a first end and a second end can be amended. By increasing the distance between the rollers the tension is increased which is shown in the video between min 2:00 and min 2:05. The belt curve is used for conveying suitcases.

Another belt curve is disclosed in EP 2 276 685 B1 similar to the above conventional belt curve. A deflection roller is suspended in a frame. The deflection roller is displaceable in a direction of movement of the conveyor belt (conveying direction), in order to be able to tension the conveyor belt after it has been mounted (EP 2 276 685 B1, [0053]).

The belt tension changes over the service life of a conveying belt. During service life of the conveying belt the belt tension can be readjusted by changing by pulling the belt in the conveying direction.

In the e-commerce industry also small items and so called soft packs are to be sorted and conveyed automatically. A parcel usually has a defined shape and a rigid surface, which makes it easy for automated handling. A soft pack is used for packaging soft content like clothes. The outer surface is are is made by a plastic sheet, so that the soft pack has a undefined shape and a slippery surface. Gaps between conveyors are the natural enemy of soft packs.

To optimize the reliability of conveyors in conveying of softpacks, the size of gaps in the conveying tracks needs to be minimized, in particular a gap to an adjacent conveyor. The topic of small gaps in relation to belt curves is in detail described in German utility model application DE 20 2021 101 563.2, published after the priority date of the present application.

But in the conventional belt curve, the position of the deflection rollers is amended for tensioning purposes. Consequently there the gap size is a variable value depending of the belt tension. Consequently the optimization capabilities in the conventional belt curve with respect to gaps are limited, since positioning the deflection roller in a manner to support the smallest gap is not possible.

It is an object of the present invention to provide an improved belt curve, in particular in view of conveying soft packs and small items. This object is solved by a belt curve and a method according the main claims; embodiments are subject of the subclaims and the description.

The inventive belt curve enables to adapt the tension by pulling the conveying belt in the radial direction instead of the conveying direction. Thus the ends of the conveying belt in the conveying direction can be positioned in a defined manner to support smallest possible gaps to adjacent conveyors.

The term "amendment of the radial guiding force" is in particular meant as increasing and/or decreasing the radial guiding force.

The belt curve is in particular adapted and/or is used to convey articles of the soft pack type. A soft pack type has a surrounding made of foil with a non-rigid shape.

An example embodiment of the invention is described with respect to the figures; herein show
- fig. 1: an inventive belt curve in perspective view;
- fig. 2: an enlarged section of the belt curve according to figure 1 in perspective view;
- fig. 3: a further enlarged section of the belt curve according to figure 1 in perspective view;
- fig. 4: another perspective view of the belt curve according to figure 1;
- fig. 5: a cross section in radial direction of the belt curve according to figure 1 along the sections plane S in figure 4;
- fig. 6: a cross section in radial direction through a tensioner of a first embodiment in the belt curve according to figure 1;
- fig. 7: a cross section in radial direction through a tensioner of a second embodiment in the belt curve according to figure 1;

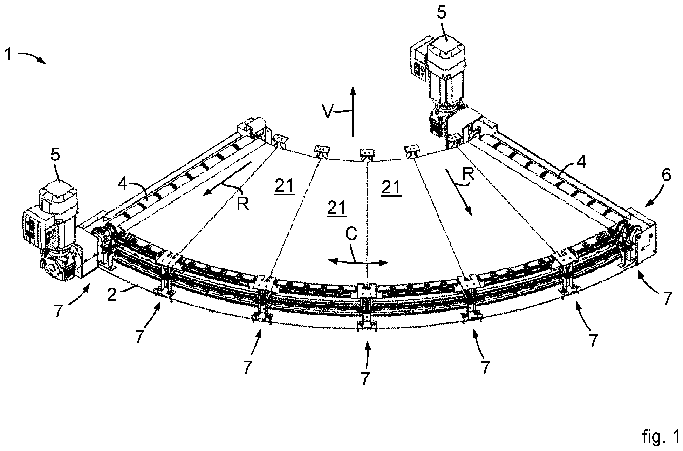

Figures 1 to 4 show a belt curve 1, which is based on the conventional belt curve as mentioned in the introduction. The belt curve 1 is a belt conveyor which is adapted to convey an object between a first end E1 and a second end E2 along a curved conveying direction C.

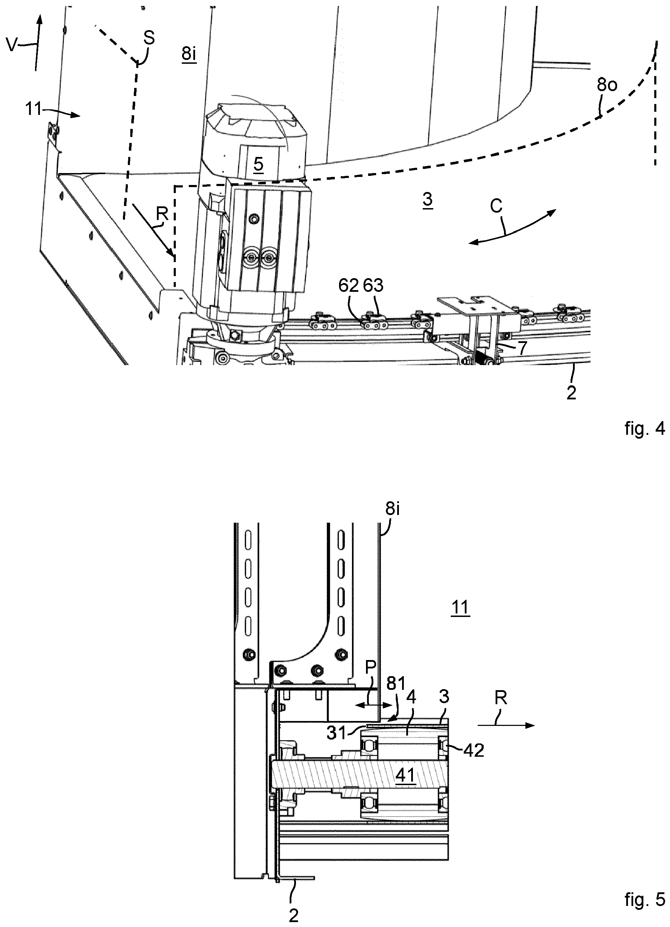

The belt curve 1 has an endless belt 3 (figure 4) which is wound around deflection rollers 4 at the first end E1 and the second end E2 (figures 1 to 3). Here at each end a plurality of deflection rollers 4 are provided which arranged coaxially to each other.

For better understanding, some components are omitted from the figures, to provide a better view on hidden components. In particular in figures 1 to 3 the belt 3 is not shown.

The belt curve 1 comprises a support frame 2 adapted to support the components of the belt curve 1. The support frame 2 supports the rollers 4. The support frame 2 is made from multiple parts. The support frame 2 in particular comprises a plurality of belt beds 21, which provides vertical support for an upper run of the belt 3.

The belt curve 1 comprises a drive 5 for providing a drive power to drive the belt 3. The drive 5 is in particular an electric motor. The drive 5 is in particular supported on the support frame 2.

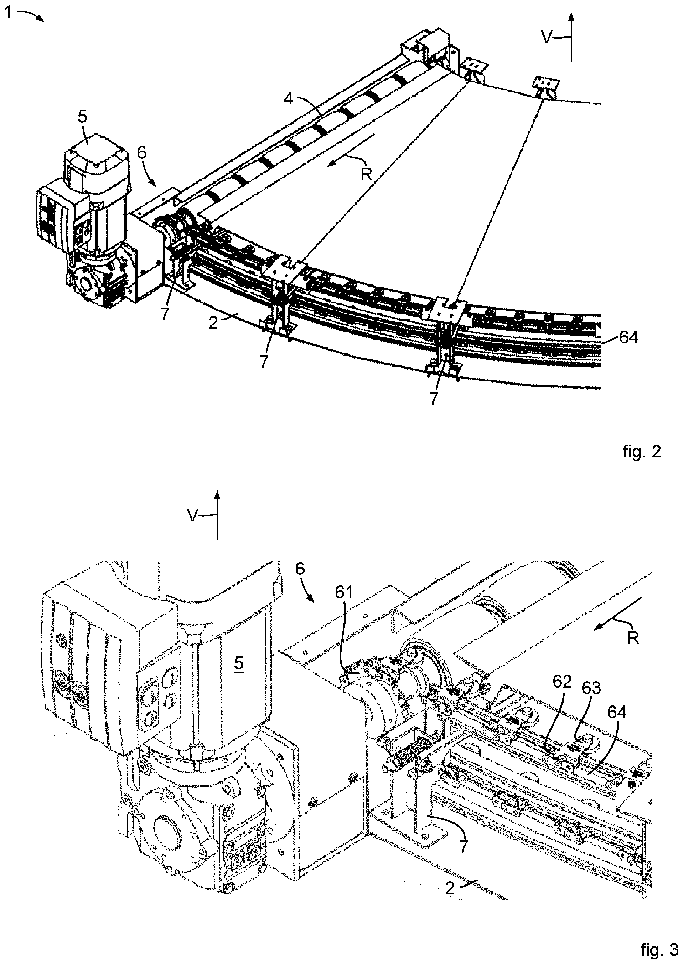

The drive 5 is connected to a chain drive 6. The chain drive 6 comprises a chain sprocket 61 (figure 3), which is connected to the drive 5. The drive chain 62 is connected to the chain sprocket 61. A drive force provided by the drive 5 is transmitted via the chain sprocket 61, the drive chain 62 and the chain connectors 63 to the belt 3. Due to improved illustration only a little number of chain links of the drive chain are shown; in fact the drive chain is closed.

The drive chain 62 is arranged parallel - when viewed in direction of the curved conveying direction C - to the belt 3 and located outwards of the belt 3 in a radial direction R. The radial direction R points from a virtual centre of the curve horizontally and radially outwards. The drive chain 62 is fixedly connected to the belt 3 by discrete or continuous chain connectors 63. The drive chain 62 is guided by a guide rail 64, which is arranged parallel to the belt 3 in the curved conveying direction C.

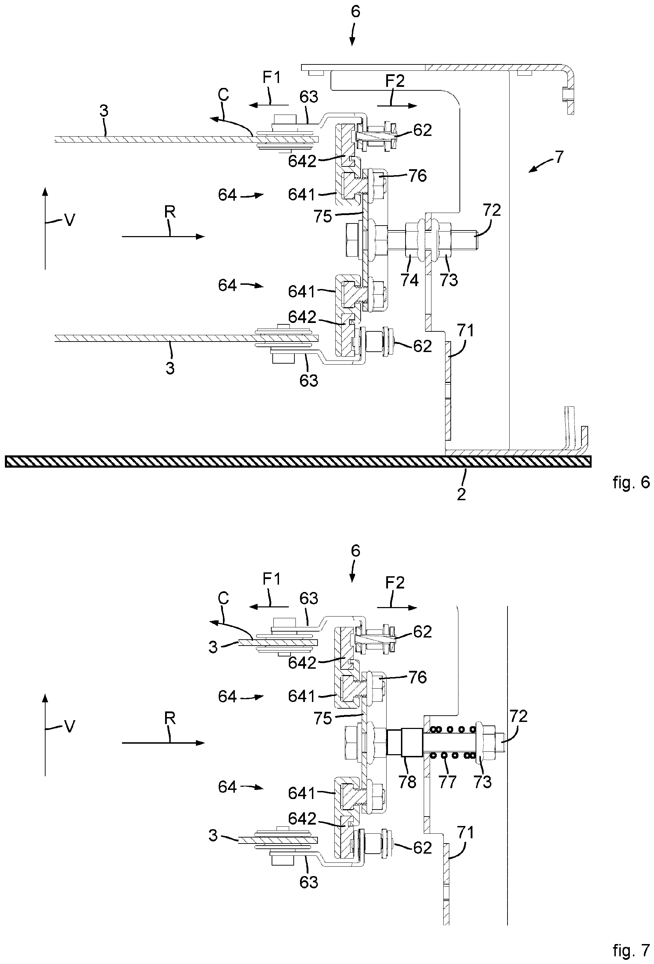

Figure 6 provides a better illustration of the chain drive 6. During operation and due to the curved conveying direction C the belt 3 is subject to a first force F1 urging the belt in the radial inner area. The guide rail 64 provides a second force F2, urging the drive chain 62 and consequently the conveying belt 3 in radial outwards direction (see arrow F2 in figure 6). Consequently a balance of forces F1, F2 results, keeping the conveying belt 3 in the desired radial position.

In the present embodiment the guide rail 64 comprises a rail carrier 641, which is made of an extruded profile. In a cavity of the rail carrier 641 a guiding strip 642 is held. The guiding strip 642 is in contact with the drive chain 62 and is made of a material supporting a low friction between the drive chain 62 and the guide rail 64.

Instead of the drive chain 62 another traction drive means in particular a drive belt can be provided. The drive belt may be a toothed belt or a V-belt or any other traction drive means. In an embodiment the traction drive means can be formed integrally with the conveying belt.

The drive chain 62 and the guide rail 64 are both oriented parallel to each other in the curved conveying direction C and contact each other in the radial direction R.

In the present embodiment, the traction means serves also for guiding the conveying belt in radial direction: Consequently the guide rail for guiding the traction means is at the same the radial guide for the conveying belt. In another embodiment it is possible, that the radial guide of the conveying belt is separate from any traction means or other drive means.

Two Separate guide rails 64 are provided for an upper run and for a lower run of the drive chain 62.

The guide rails 64 are connected via tensioners 7 to the support frame 2. A plurality of tensioners 7 are arranged along the conveying direction C next to the guide rail 64 (figures 1 and 2).

The tensioner 7 comprises a tensioner body 71 which is connected to the support frame 2. Attached to the main body 71 is a tensioning screw 72. The tensioning screw 72 is attached to a connecting bracket 75. The connecting bracket 75 is attached to at least one of the guide rails 64, in particular to the guide rail 64 for guiding the upper run of the drive chain 62 and to the guide rail 64 for guiding the lower run of the guiding chain 62 via a screw fixing. The screw fixing allows relative adjustment between the guide rail 64 and the connecting bracket 75 in conveying direction C.

The tensioner serves to adapt the position of the guide rail 64 relative to the support frame 2 in the radial direction R. The more the guide rail 64 is positioned outwards in the radial direction R the larger a belt tension of the conveying belt 3 gets.

The tensioning screw 72 is fixed to the tensioner body 71 by means of a fixing nut 74 and an adjustment nut 73. For adapting the tension of the conveying belt 3 the fixing nut 74 is released. Now, by turning the adjustment nut 73 the conveying belt 3 can be pulled or released in the radial direction R to adjust the tension of the conveying belt 3 as desired. Afterwards the fixing nut 74 is tightened.

In alternative embodiment the tensioning screw can directly be attached to a part of the support frame 2, so that the tensioner body 71 may be obsolete.

Figure 7 shows an embodiment which is based in main on the embodiment of figure 6, so that the description related to figure 6 is also valid for figure 7. Merely the differences are described below. In this embodiment a tensioning spring 77 is arranged between the tensioning nut 72 and the tensioner body 71. By turning the tensioning nut 72 the tensioning spring 77 is put under preload and the preload can be adjusted. The preload defines the force F2 which pulls the conveying belt 3 radially outwards. The preload of the tensioning spring 72 will still be present also in case that the due to increased wear the elasticity of the conveying belt is reduced over the service life. So the embodiment of figure 7 need fewer adjustments by a service technician that the embodiment of figure 6.

A damper 78 may be provided to avoid any disturbing oscillations.

A conveying area 11 is defined by an inner lining 8i in the radial inner direction (see figures 4, 5), the conveying belt 3 in the vertical downward direction and an outer lining 8o in the radial outer direction (figure 4).

Based on the description above it is apparent that the position of the conveying belt 3 in the radial direction R can vary over the service lifetime.

Figure 5 shows a section of the conveying belt 3 in an inner area of the belt curve. The radial inner end of the conveying belt 3 protrudes into an accommodation gap 81, which is located vertically between the inner lining 8i and the deflection roller 4.

The inner lining 8i is arranged parallel the curved conveying direction C. The inner lining is oriented vertically. So even if the position of the conveying belt 3 in the radial direction varies during lifetime or by amending the preload of the conveying belt 3 (see arrow P in figure 5), the conveying belt 3 matches always perfectly with the inner lining 8i. So here an inner edge 31 of the conveyor belt is always located radially inwards relative to the inner lining 8i.

The deflection rollers 4 can rotate independently from the other deflection rollers 4 at the same end E1, E2 (see figure 5). In particular each deflection roller 4 is supported via by a bearing 42 on a common shaft 41 for all deflection rollers 4.

A radial inner lining 8i limits a conveying space in a direction radially inwards (figure 4). A radial outer lining limits a conveying space in a direction radially outwards (not shown).

### List of reference signs

- 1: belt curve
- 2: support frame
- 3: conveying belt
- 4: deflection roller
- 5: drive
- 6: chain drive
- 7: tensioner
- 8i: radial inner lining
- 8o: radial outer lining
- 11: conveying area
- 21: belt bed
- 41: shaft
- 42: bearing
- 61: chain sprocket
- 62: drive chain
- 63: chain connector
- 64: guide rail
- 641: rail carrier
- 642: guiding strip
- 71: tensioner body
- 72: tensioning screw
- 73: adjustment nut
- 74: fixing nut
- 75: connecting bracket
- 76: rail fixing
- 77: tensioning spring
- 78: damper
- 81: accommodation gap
- R: radial direction
- C: curved conveying direction
- V: vertical direction
- S: Section pane
- E1: first end
- E2: second end
- F1: force radially inward
- F2: force radially outward

## Claims

1. Belt curve (1),
the belt curve is adapted to convey an object along a curved conveying direction (C) in a conveying area (11) between a first end (E1) and a second end (E2), wherein the conveying direction (C) is perpendicular to a radial direction (R);
the belt curve comprising:
- a supporting frame (2);
- a conveying belt (3), which is arranged circumferentially on the support frame (2) and adapted to carry the object;
- at least one deflection roller (4) located at each of the first end (E1) and the second end (E2), the conveying belt (3) is deflected around the deflection roller (4);
- a drive (5) adapted to provide a drive power for the conveying belt (3);
- a guiding (64), in particular a guide rail, adapted to guide the conveying belt (3) in the conveying direction (C), thereby providing a guiding force (F2) in radial outward direction (R),
**characterized by**
a tensioner (7) adapted for selective amendment of the radial guiding force (F2) to the conveying belt (3).

2. Belt curve (1) according to the preceding claim,
**characterized by**
a traction drive (6) adapted to transmit a driving power from the drive (5) to the conveying belt (3);
the traction drive (6) comprising a traction means (62), in particular a drive chain or a drive belt,
wherein the traction means (62) are arranged in parallel to the conveying belt (3) in the conveying direction (C);
wherein the guiding (64) is adapted to keep the traction means (62) in a defined radial position relative to the support frame (2).

3. Belt curve (1) according to any of the preceding claims
**characterized in**
**that** the tensioner (7) is adapted for selective amendment the radial position of the guiding (64) relative to the support frame (2).

4. Belt curve according to any of the preceding claims,
**characterized in**
**that** the conveying belt is held under a preload (F2) in the radial direction (R), the tensioner (7) comprises means (72, 73) to amend the preload.

5. Belt curve (3) according to any of the preceding claims,
**characterized in**
**that** the tensioner (7) comprises a tensioning spring (77) providing the preload to the conveying belt (3),
wherein the tensioning means (72, 73) are adapted to tighten and release the tensioning spring (77), in particular upon a user interaction.

6. Belt curve (3) according to any of the preceding claims,
**characterized by**
an inner lining (8i) limiting a conveying area (11) in a radial inward direction wherein the belt protruding radially inwards into an accommodation gap (81) below the inner lining (8i).

7. Belt curve (3) according to the preceding claim,
**characterized in**
**that** the accommodation gap (81) is located vertically between the inner lining (8i) and a deflection roller (4).

8. Belt curve (3) according to claim 6 or 7,
**characterized in**
**that** in radial inner edge (31) of the conveying belt (3)
- is located in the accommodation gap (81) and/or
- is located radially inwards relative to the inner lining (8i).

9. Belt curve (3) according to any of the preceding claims,
**characterized in**
**that** said conveying area (11) is limited by
- said inner lining (8i) in the radial inner direction,
- said conveying belt (3) in the vertical downward direction and
- an outer lining (8o) in the radial outer direction.

10. Method of adjusting a tension of a conveying belt (3) in a belt curve(1),
in particular a belt curve (1) according to any of the preceding claims;
the belt curve is adapted to convey an object along a curved conveying direction (C) between a first end (E1) and a second end (E2), wherein the conveying direction (C) is perpendicular to a radial direction (R);
the belt curve comprising:
- a supporting frame (2);
- a conveying belt (3), which is arranged circumferentially on the support frame (2) in particular around a deflection roller (6) and adapted to carry the object;
- at least one deflection roller (4) located at each of the first end (E1) and the second end (E2), the conveying belt (3) is deflected around the deflection roller (4);
- a drive (5) adapted to provide a drive power for the conveying belt (3);
- a guiding (64), in particular a guide rail, adapted to guide the conveying belt (3) in the conveying direction (C), thereby providing a guiding force (F2) in radial outward direction (R);
wherein the tension of the conveying belt (3) is adapted by radially pulling and/or radially releasing the conveying belt (3).

11. Method according to the preceding claim,
wherein during adjusting the tension of the belt the position of the deflection roller remain unchanged.
